# EUROPÄISCHE PATENTSCHRIFT

(11) **EP 1 372 106 B1**
(45) Veröffentlichungstag und Bekanntmachung des Hinweises auf die Patenterteilung: **04.10.2006**
(21) Anmeldenummer: 03000500.3
(22) Anmeldetag: 14.07.1997
(51) Int. Cl.: G06K 19/077

(54) **System aus Wickelkernen mit Wickelbändern und einem Schreib-/Lesegerät, welches zum berührungslosen Auslesen und/oder Überschreiben von Daten dient**
System comprising roll cores with roll bands and a reading/writing device for non-contact reading and/or overwriting of data
Système comprenant des tubes d'enroulement avec bandes enroulées et un dispositif de lecture et/ou de surécriture sans contact des données

(30) Priorität: 09.08.1996 CH 195596; 28.08.1996 CH 211896
(43) Veröffentlichungstag der Anmeldung: 17.12.2003
(62) Teilanmeldung aus: 97810471.9
(73) Patentinhaber: Ferag AG, 8340 Hinwil (CH)
(72) Erfinder: Maeder, Carl Conrad, CH-8335 Hittnau ZH (CH)
(74) Vertreter: Frei, Alexandra Sarah

(56) Entgegenhaltungen:
- WO-A-93/12513
- WO-A-94/11846

## Beschreibung

Die Erfindung betrifft ein System mit Wickelkernen und Wickelbändern, die für die Erstellung von Wickeln aus Druckprodukten ausgerüstet sind und eletronisch gespeicherte Daten tragen, die durch ein Schreib/Lesegerät mit einer Hauptleserichtung berührungslos auslesbar und/oder berührungslos überschreibbar sind.

In den verschiedensten Anwendungsbereichen wie Fabrikation, Unterhalt, Analytik, Lagerhaltung etc. wird es mehr und mehr wünschenswert, bewegliche Objekte mit automatisch lesbaren Kennzeichnungen zu versehen. Derartige Kennzeichnungen dienen beispielsweise der automatischen Identifikation der Objekte. Automatisch lesbare Kennzeichnungen sind beispielsweise mit optischen Geräten erfassbare Markierungen oder elektronisch gespeicherte Daten.

Optische Markierungen sind beispielsweise Strichcodes. Das Lesen erfolgt berührungslos, wobei zwischen Markierung und Lesegerät ein als Bereich vorgegebener Leseabstand und Lesewinkel einzuhalten sind und wobei die Markierung sichtbar sein muss, das heisst nicht von einem undurchsichtigen Medium vom Lesegerät getrennt sein darf.

Elektronisch gespeicherte Daten sind beispielsweise in einer entsprechenden integrierten Schaltung gespeichert, welche Schaltung am zu kennzeichnenden Objekt angebracht ist. Derartige Schaltungen werden zum Auslesen der darin gespeicherten Daten mit einem Lesegerät oder der Sonde eines solchen Gerätes kontaktiert oder sie weisen eine Antenne auf und die gespeicherten Daten können dann mit einem entsprechend ausgerüsteten Lesegerät berührungslos ausgelesen werden. Schaltung, Antenne und Lesegerät können dabei derart ausgestaltet sein, dass die Daten, die in der Schaltung gespeichert sind, durch das Gerät nicht nur lesbar sondern auch überschreibbar sind (Schreib/Lesegerät) und auch derart, dass die für das Auslesen oder Überschreiben in der Schaltung gebrauchte Energie ebenfalls berührungslos vom Gerät auf die Schaltung übertragbar ist, sodass für die Schaltung keine spezielle Energiequelle (z.B. Batterie) vorzusehen ist.

Im Unterschied zu optischen Markierungen können elektronisch gespeicherte Daten neben einer Identifikationsfunktion auch Steuerfunktionen übernehmen, das heisst, es können mit Hilfe derartiger Daten entsprechend ausgerüstete Vorrichtungen direkt angesteuert werden.

Für eine Datenübertragung mit Kontaktierung, ist eine genau bestimmte relative Position von Schreib/Lesegerät und Objekt zu erstellen. Eine berührungslose Datenübertragung ist je nach Ausgestaltung von Schaltung, Antenne und Schreib/Lesegerät in mehr oder weniger frei wählbaren relativen Positionen von Objekt und Schreib/Lesegerät möglich. Offensichtlich ist es aber so, dass es in einem System mit einer hohen Freiheit bezüglich Lese/Schreib-Position schwieriger oder nicht mehr möglich ist, ohne weitere Hilfsmittel die Datenübertragung auf ein spezifisches Objekt zu beschränken oder Datenübertragung und Lokalität des Objektes funktionell zu verknüpfen (Lokalisierung von Objekten und/oder Übernahme von Steuerfunktionen durch Objekte, die sich in einer spezifischen Lokalität aufhalten).

Die Publikation WO 94/11846 offenbart eine Vorrichtung mit einer Antenne und elektronisch gespeicherten Daten, die zu Identifikationszwecken in einer Papierrolle positioniert wird.

Das erfindungsgemässe System weist im wesentlichen hohlzylindrische Wickelkerne mit Wickelbändern auf und ein Lese- und/oder Schreibgerät. Die Wickelkerne und die Wickelbänder sind ausgerüstet für die Erstellung von beweglichen Wickeln. Die Wickelkerne oder die Wickel weisen eine Antennenschlaufe und eine integrierte Schaltung mit darin gespeicherten Daten auf. Die Antennenschlaufen verlaufen um Wickelkern oder Wickel und spannen je eine Antennenflächen auf, die im wesentlichen senkrecht zur Achse des Wickelkerns verläuft. Das Lese- und/oder Schreibgerät hat eine Hauptleserichtung und ist zum berührungslosen Auslesen und/oder Überschreiben der in der integrierten Schaltung gespeicherten Daten ausgerüstet und relativ zu Wickelkernen oder Wickeln bewegbar. Im System sind Wikkel oder Wickelkerne koaxial aufeinander ausgerichtet und das Lese- und/oder Schreibgerät ist in die koaxial aufeinander ausgerichteten Wickelkerne bewegbar, wobei die Hauptleserichtung des Gerätes senkrecht oder schief zu den von den Antennenschlaufen aufgespannten Antennenflächen ausgerichtet ist.

Die Leiterschlaufe kann derart ausgestaltet sein, dass sie nur in bestimmten Zuständen von Wickelkern oder Wickelband geschlossen ist, das heisst, dass die Daten nur in bestimmten Zuständen von Wickelkern oder Wickelband überschreib- bzw. lesbar sind.

Das erfindungsgemässe System und Beispiele von Antennen fur Wickelkerne oder Wickelbänder sind im Detail beschrieben im Zusammenhang mit den folgenden Figuren. Diese zeigen:
- **Figur 1**: einen Druckproduktewickel mit integrierter Schaltung und Antenne
- **Figur 2**: eine Mehrzahl von gelagerten Druckproduktewickeln und Wickelkernen und ein Schreib/Lesegerät;
- **Figuren 3 und 4**: zwei beispielhafte Varianten von Antennen, die mindestens teilweise auf Wickelbändern angeordnet sind;
- **Figur 5**: ein Wickelband mit zwei Antennen und zwei damit verbundenen integrierten Schaltungen;
- **Figur 6**: ein Wickelkern mit integrierter Antenne;
- **Figuren 7 und 8**: zwei bevorzugte Ausführungsformen von Verbindungsstücken zur Verbindung von integrierter Schaltung und Antennenschlaufe;

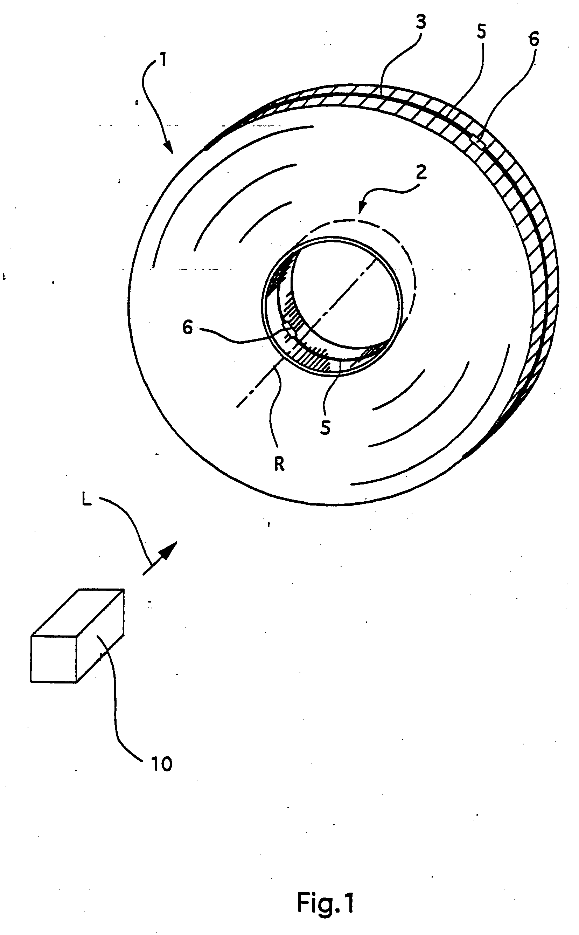

**Figur 1** zeigt einen Wickel 1 von Druckprodukten, wie er in der Weiterverarbeitung von Druckereierzeugnissen oft als Lagerformation zur Anwendung kommt. Der Wickel 1 hat einen meist aus Kunststoff gefertigten, im wesentlichen hohlzylindrischen Wickelkern 2, auf den die Druckprodukte mit Hilfe eines Wickelbandes 3 aufgewickelt sind.

Derartige Wickel sind im wesentlichen rotationssymmetrisch bezüglich ihrer Achse R. Sie werden positioniert beispielsweise durch Aufhängen im Bereiche des Wickelkerns (Rotationsachse im wesentlichen horizontal), durch Ablegen mit vertikaler Rotationsachse, durch koaxiales Aufeinanderstapeln in einer derartigen Position oder durch Anlehnen allein oder in Gruppen an eine Stütze mit gegenüber der Horizontalen leicht schiefer Rotationsachse. In allen diesen Fällen ist die Drehposition relativ zur Rotationsachse mindestens des Kernes oder der Enden des aufgewickelten Bandes irrelevant, das heisst, es sind in allen Fällen unendlich viele, gleichwertige Rotationspositionen möglich. Die Antennenfläche für einen derartigen Wickel ist derart auszugestalten, dass sie durch Rotation des Wickels ihre Position nicht verändert oder nur derart, dass sie von einer gleichbleibenden Hauptleserichtung eines Schreib/Lesegerätes in jeder Rotationsposition durchdrungen wird.

In der Figur 1 sind zwei beispielhafte, mögliche Ausgestaltungen von Antennenschlaufen 5 dargestellt, wobei die eine sich um den Aussenumfang des Wickels erstreckt (z.B. im Wickelband integriert ist) und die andere sich um den äusseren oder inneren Kernumfang erstreckt oder im Kernmaterial integriert ist.

Die Antennenschlaufe 5 ist ein elektrischer Leiter, dessen Enden auf beiden Seiten einer Lücke positioniert und mit der integrierten Schaltung und gegebenenfalls mit weiteren elektronischen Funktionselementen (z.B. Kondensator für Abstimmung oder Energiespeicherung oder Widerstand für Dämpfung) leitend verbunden sind. Dabei sind die integrierte Schaltung und die weiteren Elemente vorteilhafterweise direkt in der Lücke zwischen den Schlaufenenden, beispielsweise auf einem entsprechenden Verbindungsstück 6 angeordnet.

Die Antennenschlaufe besteht beispielsweise aus einem Draht oder Kabel oder aus einem Metallband, das im wesentlichen senkrecht zur von der Antenne aufgespannten Antennenfläche angeordnet ist.

Die Figur 1 zeigt schematisch auch ein Schreib/Lesegerät 10, dessen Hauptleserichtung L senkrecht oder schief, zentrisch oder exzentrisch zur von der Antenne 5 aufgespannten Fläche ausgerichtet ist. Solange die Antennenfläche von der Hauptleserichtung L durchdrungen wird, ist ein Lese- bzw. Schreibvorgang möglich, wobei die energetischen Verhältnisse derart einrichtbar sind, dass ein zweiter Wickel, der beispielsweise koaxial mit dem dargestellten Wickel und in der Figur hinter diesem deponiert ist (sodass L auch seine Antennenfläche durchdringt), vom Schreib- bzw. Lesevorgang nicht betroffen wird (kein Übersprechen).

Varianten zu den in der Figur 1 dargestellten Antennenschlaufen 5 sind Antennenschlaufen, die auf Kern oder Band angeordnet sind, die aber eine nicht ebene oder eine zwar ebene aber schief zu den Wickelstirnflächen stehende Antennenfläche aufspannen.

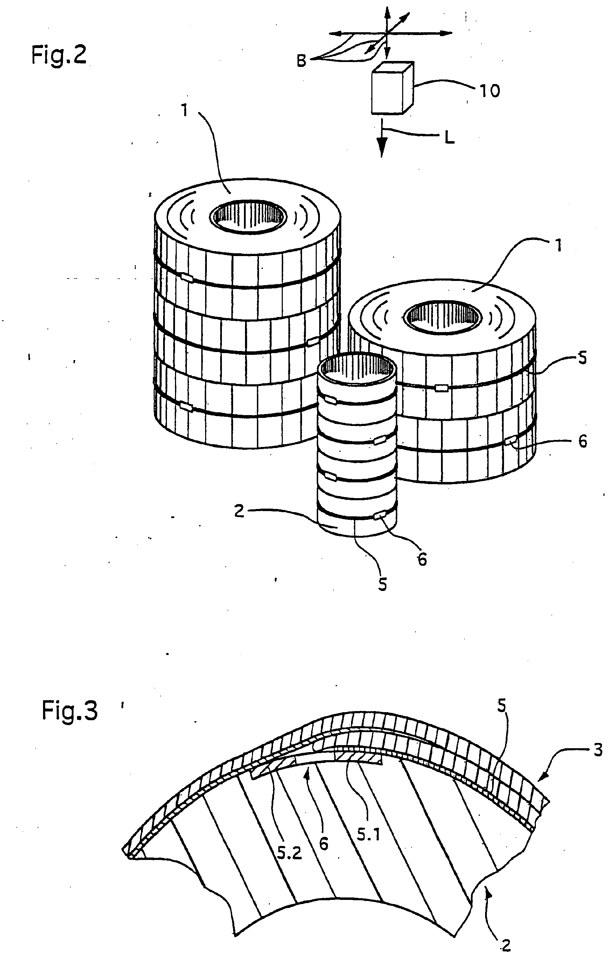

**Figur 2** zeigt ein beispielhaftes Lager von Druckproduktewickeln 1, alle ausgerüstet mit Antennenschlaufen 5 und Verbindungsstücken 6, die auf dem äusseren Ende des Wickelbandes angeordnet sind. Die Wickel sind in beliebiger Drehposition koaxial aufeinander gestapelt in nebeneinander angeordneten Stapeln. Auch leere Wickelkerne 2 mit darauf aufgewickeltem Wickelband sind in derselben Weise gelagert.

Die Figur 2 zeigt auch ein Schreib/Lesegerät 10 mit einer Hauptleserichtung L, die im wesentlichen senkrecht zu den Antennenflächen der Wickel 1 und Wickelkerne 2 ausgerichtet ist. Das Schreib/Lesegerät 10 ist, wie durch die Pfeile B angedeutet, horizontal und vertikal bewegbar und ist insbesondere in die Kernhohlräume der Stapel bewegbar. Es kann auch direkt an einem Greifer zum Ergreifen von Wickeln oder Wickelkernen befestigt sein.

Da die Antennenflächen der aufeinander gestapelten Wickel und Wickelkerne nicht nur parallel zueinander sondern bezüglich der Hauptleserichtung auch aufeinander ausgerichtet sind, ist ein Übersprechen von Wickelkernen aus verschiedenen Stapeln nicht möglich, auch wenn diese beispielsweise dadurch, dass es sich um leere Kerne handelt, einander sehr nahe sind. Die Antennenflächen der Wickel oder Wickelkerne eines einzigen Stapels sind durch ihre Distanz klar voneinander getrennt, sodass auch innerhalb eines Stapels ein Übersprechen einfach vehinderbar ist.

Das heisst mit anderen Worten, jeder der gestapelten Wickel 1 und Wickelkerne 2, die in der Figur 2 dargestellt sind, sind durch das sich bewegende Schreib/Lesegerät 10 eindeutig lokalisierbar, wobei beim Einfahren des Gerätes in die Kernhohlräume keine Präzision notwendig ist.

**Figuren 3 bis 6** zeigen beispielhafte Antennenanordnungen für Wickelkerne bzw. Wickel. Diese sind alle anwendbar im Bereiche der Weiterverarbeitung von Druckereierzeugnissen, wobei sie aber nicht auf diese Anwendung beschränkt sind. Sie sind in analoger Weise anwendbar für Wickel beliebiger Güter, die mit oder ohne Wickelband auf Wickelkerne aufgewickelt werden.

Die Antennenanordnung gemäss **Figur 3** besteht aus einem auf dem Wickelkern 2 angeordneten Verbindungsstück 6 mit zwei Schlaufenanschlussbereichen 5.1 und 5.2 und einer elektrisch leitenden Schlaufe 5, die beispielsweise als metallische Beschichtung auf dem elektrisch isolierenden Kunststoffmaterial des Bandes im Bereiche des Bandendes aufgebracht ist. Das beschichtete Bandende wird nun derart am Kern 2 befestigt, dass die Schlaufe 5 mit dem einen (5.1) der Schlaufenanschlussbereiche des Verbindungsstücks 6 kontaktiert ist. Die Länge der Schlaufe 5 ist mindestens so lang wie ein Kernumfang, sodass sie, wenn das Wickelband um den Kern gewickelt wird, den zweiten Schlaufenanschlussbereich 5.2 des Verbindungsstückes kontaktiert, wodurch die Antennenschlaufe 5 durch das Verbindungsstück 6 geschlossen ist.

Offensichtlich sind Daten, die in einer zwischen den beiden Schlaufenanschlussbereichen 5.1 und 5.2 angeordneten und mit diesen verbundenen, integrierten Schaltung (nicht dargestellt) gespeichert sind, nur auslesbar, wenn auf den Kern ein Wickelband mit einer entsprechend ausgestalteten Antennenschlaufe 5 aufgewickelt ist. Das heisst mit anderen Worten, es gibt einen Wickelkern-Zustand, in dem Lesen bzw. Überschreiben der Daten zustandsbedingt gesperrt ist.

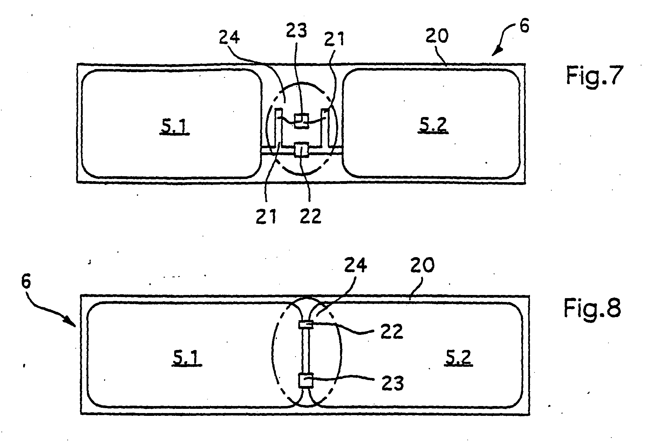

Die Ausführungsform der Antennenanordung gemäss Figur 3 ist insbesondere vorteilhaft zum Nachrüsten von Wickelkernen 2, die bereits im Betrieb sind. Da es bereits üblich ist, Wickelbänder in ihrem Endbereich zur automatischen Erkennung dieses Bereiches mit einem leitenden Bestandteil (z.B. metallische Schicht) zu versehen, können mit derselben Technik Wickelbänder mit Antennenschlaufen hergestellt werden. Dann muss zusätzlich lediglich ein Verbindungsstück 6 mit zwei Schlaufenanschlussbereichen 5.1 und 5.2 auf dem Kern montiert, das heisst beispielsweise aufgeklebt werden. Beispiele von derartigen Verbindungsstücken 6 sollen im Zusammenhang mit den Figuren 7 und 8 noch mehr im Detail beschrieben werden.

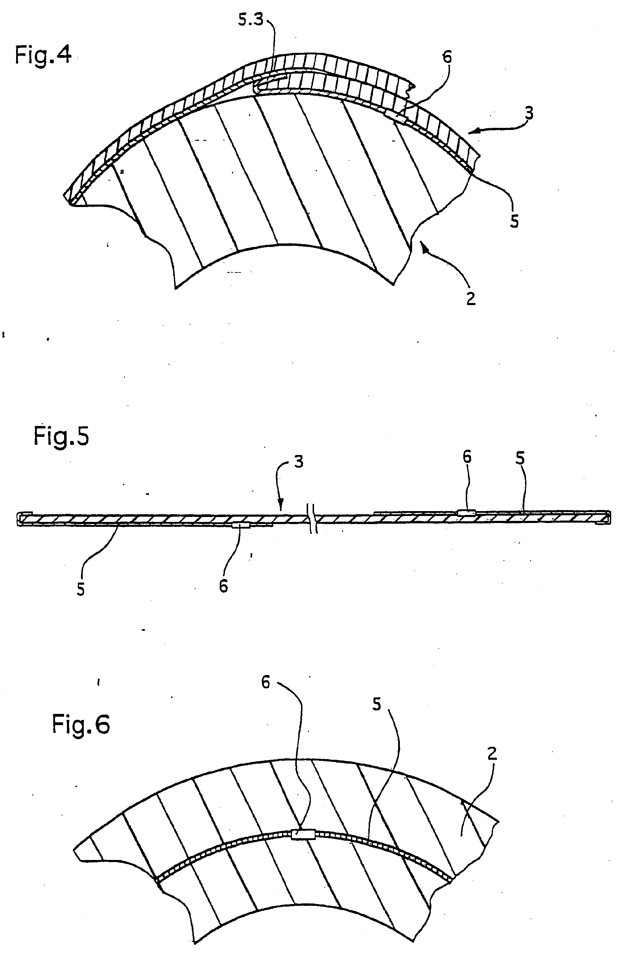

**Figur 4** zeigt eine ganz auf dem Wickelband 3 angeordnete Antennenanordnung, wiederum beispielsweise bestehend aus Wickelschlaufe 5 und Verbindungsstück 6. Die Schlaufe 5 ist wiederum beispielsweise als leitende Beschichtung des Bandes ausgebildet, wobei der leitende Bereich mindestens so lang ist wie ein Umfang eines Wickelkernes 2. Der leitende Bereich führt um das Bandende von dessen innerer, gegen den Wickelkern gewandten Seite auf die andere Bandseite und bildet dort einen Kontaktbereich 5.3 mit dem die Beschichtung eines darüber gewickelten Bandbereichs kontaktierbar ist. Irgendwo auf ihrer Länge ist die Schlaufe 5 unterbrochen durch das Verbindungsstück 6 oder entsprechend durch eine Lücke, wobei die Schlaufenenden beidseits der Lücke in irgend einer Weise mit der integrierten Schaltung verbunden sind.

Die in der Figur 4 dargestellte Ausführungsform ist auch am auf dem Wickel aussenliegenden Bandende anwendbar. Die Schlaufe 5 ist dann auf der äusseren Bandoberfläche, der Kontaktbereich 5.3 auf der inneren Bandoberfläche anzuordnen und die Schlaufe muss mindestens die Länge des Umfangs eines vollen Wickels haben. Es ist offensichtlich, dass eine derartige Antennenanordnung, sobald das Bandende beispielsweise bei Auf- oder Abwickeln vom Wickel gelöst ist, nicht mehr funktioniert, das heisst das Überschreiben und/oder Lesen von Daten gesperrt ist.

**Figur 5** zeigt im Längsschnitt ein Wickelband 3, das an beiden Enden mit einer Antennenanordnung, bestehend aus Antennenschlaufe 5 und Verbindungsstück 6 ausgerüstet ist. Entsprechen die Längen der beiden Schlaufen im wesentlichen dem Umfang des mit dem Wickelband zu verwendenden Wickelkernes, kann das Band in beiden Richtungen (unabhängig davon, welches Bandende auf dem Wickelkern angeordnet ist) zum Wickeln verwendet werden und es wird sich immer eine um den Wickelkern geschlossene Antennenschlaufe bilden. Entsprechen die Längen beider Schlaufen im wesentlichen dem Umfang eines vollen Wickels, ist das Band ebenfalls in beiden Richtungen verwendbar und es wird sich immer sowohl eine geschlossene Antenne um den Wickelkern als auch eine geschlossene Antenne um den Wickelumfang bilden, wobei ein Überschreiben bzw. Lesen der Daten der äusseren Anordnung während dem Wickelvorgang (Schlaufe nicht geschlossen) gesperrt ist.

Vorteilhafterweise ist eine Antennenschlaufe auf einem Wickelband parallel zu den Längskanten des Bandes angeordnet. Dies ist aber keine Bedingung, das heisst, die Antennenschlaufe kann auch schief oder alternierend auf dem Band angeordnet sein.

Die Antennenanordnungen gemäss Figuren 4 und 5 sind auf das Wickelband beschränkt, das heisst, der Wickelkern dient für die Funktion der Datenübertragung lediglich als formgebendes Element.

**Figur 6** zeigt noch einen Schnitt durch einen Wickelkern 2 mit darin integrierter Schlaufe 5 und Verbindungsstück 6. Die Antennenschlaufe 5 kann wie dargestellt parallel zu den Stirnflächen des Wickelkerns verlaufen oder nicht.

**Figuren 7 und 8** zeigen bevorzugte Ausführungsformen von Verbindungsstücken 6. Ein derartiges Verbindungsstück 6 ist als gedruckte Schaltung auf einem steifen oder flexiblen Träger ausgestaltet, welche gedruckte Schaltung mit der integrierten Schaltung und gegebenenfalls mit weiteren elektronischen Funktionseinheiten (z.B. Kondensator zur Abstimmung oder Energiespeicherung oder Widerstand zur Dämpfung) bestückt ist.

Das Verbindungsstück gemäss Figur 7 weist auf einem Träger 20 eine gedruckte Schaltung mit zwei Schlaufenanschlussbereichen 5.1 und 5.2 und dazwischen angeordneten, weiteren Leitern 21 auf. Diese sind derart beispielsweise mit einem Kondensator 22 und der integrierten Schaltung 23 bestückt, dass Kondensator und integrierte Schaltung parallel zueinander mit den Schlaufenanschlussbereichen 5.1 und 5.2 verbunden sind. Vorteilhafterweise wird der Bereich zwischen den Schlaufenanschlussbereichen 5.1 und 5.2 mit einem Schutzlack 24 überdeckt.

Das Verbindungsstück 6 gemäss Figur 8 unterscheidet sich vom Verbindungsstück gemäss Figur 7 durch das Fehlen der weiteren Leiter 21, wodurch das Verbindungsstück denkbar einfach wird. Die gedruckte Schaltung weist lediglich zwei Schlaufenanschlussbereiche 5.1 und 5.2 auf, die durch einen derart kleinen Abstand voneinander beabstandet sind, dass sowohl der Kondensator 22 als auch die integrierte Schaltung 23 direkt mit den Schlaufenanschlussbereichen 5.1 und 5.2 mit einem leitenden Kleber verklebt oder entsprechend verlötet werden können.

Typische Masse für das Verbindungsstück 6 für eine Anwendung gemäss Figuren 1 bis 6 sind beispielsweise: Dicke der Leiterbereiche (5.1, 5.2, 21): 20 bis 35 µm, Breite der Schlaufenanschlussbereiche (5.1 und 5.2): 20 bis 40 mm, Dicke des starren oder flexiblen Trägers (20): 20 bis 50 µm.

Für die Montage von Leiterschlaufe 5 und Verbindungsstück 6 beispielsweise auf einem Wickelband (Anwendung gemäss Figuren 4 oder 5) oder an einem Wickelkern, werden vorteilhafterweise Verbindungsstücke 6 verwendet, auf deren Schlaufenanschlussbereiche 5.1 und 5.2 elektrisch leitende, beidseitig klebende Folienstücke geklebt sind, deren Aussenseite mit einer abschälbaren Schutzfolie bedeckt ist. Die Leiterschlaufe wird in Form eines Drahtes oder Metallbandes oder in Form einer leitenden Beschichtung auf dem Wickelkern oder Wickelband aufgebracht. Dann werden die Schutzfolien von den Schlaufenanschlussbereichen des Verbindungsstückes entfernt und wird dieses derart über die Lücke zwischen den Schlaufenenden geklebt, dass die beiden Schlaufenenden mit den Schlaufenanschlussbereichen kontaktiert sind.

Selbstverständlich ist es auch denkbar, dass in derselben Art, wie in den Figuren 7 und 8 für ein Verbindungsstück gezeigt, die ganze Antenne hergestellt wird, indem von den Schlaufenanschlussbereichen 5.1 und 5.2 mindestens der eine bedeutend länger ausgebildet ist, derart, dass die beiden Schlaufenanschlussbereiche die ganze Länge der Schlaufe darstellen. Für eine Montage wird ein derartig verlängertes Verbindungsstück um einen Wickelkern geklebt und werden dessen Endbereiche mit geeigneten Mitteln leitend miteinander verbunden.

## Patentansprüche

1. System mit einer Mehrzahl von im wesentlichen hohlzylindrischen Wickelkernen (2) mit Wickelbändern (3) und einem Lese- und/oder Schreibgerät (10), wobei die Wickelkerne (2) und Wickelbänder (3) für die Erstellung von beweglichen Wickeln (1) insbesondere aus Druckprodukten ausgerüstet sind, wobei die Wikkelkerne (2) oder die Wickel (1) eine Antennenschlaufe (5) aufweisen, die eine Antennenfläche aufspannt und eine Lücke hat, wobei die an die Lücke grenzenden Enden der Antennenschlaufe (5) mit einer integrierten Schaltung (23) mit darin gespeicherten Daten verbunden sind, wobei das Lese- und/oder Schreibgerät (10) eine Hauptleserichtung (L) aufweist und zum berührungslosen Auslesen und/oder Überschreiben der in der integrierten Schaltung gespeicherten Daten ausgerüstet und relativ zu Wickelkernen (2) oder Wickeln (1) bewegbar ist, wobei die Antennenschlaufe (5) um Wickelkerne (2) oder Wickel (1) verläuft, derart, dass die durch die Antennenschlaufe (5) aufgespannte Antennenfläche im wesentlichen senkrecht zur Achse des Wickelkerns (2) ausgerichtet ist, und wobei das System ferner Anordnungen von im wesentlichen koaxial aufeinander ausgerichteten Wickelkernen (2) und/oder Wickeln (1) aufweist und das Lese- und/oder Schreibgerät (10) zur Indentifizierung und Lokalisierung von Wickeln (1) oder Wickelkernen (2) in die koaxial aufeinander ausgerichteten Wickelkerne (2) solcher Anordnungen bewegbar ist, derart, dass seine Hauptleserichtung (L) senkrecht oder schief zu den von den Antennenschlaufen (5) aufgespannten Antennenflächen ausgerichtet ist.

2. System nach Anspruch 1, wobei mindestens ein Teil der Antennenschlaufe (5) auf dem Wickelband (3) angeordnet ist.

3. System nach Anspruch 2, wobei auf dem Wickelkern (2) zwei durch eine Lücke voneinander beabstandete und mit der integrierten Schaltung verbundene Schlaufenanschlussbereiche (5.1 und 5.2) angeordnet sind, die durch die Antennenschlaufe (5) auf dem Wickelband (3) kontaktiert sind, wenn das Wickelband (3) auf dem Wickelkern (2) aufgewickelt ist.

4. System nach Anspruch 2, wobei die Antennenschlaufe (5) auf dem Band (3) eine Lücke aufweist und die Schlaufenenden auf den beiden Seiten der Lücke mit der ebenfalls auf dem Band angeordneten integrierten Schaltung (23) verbunden sind und wobei zwei übereinandergewickelte Schlaufenbereiche miteinander kontaktiert sind, wenn das Band (3) um den Wickelkern (2) oder um den Wickel (1) gewunden ist.

5. System nach Anspruch 4, wobei die Schlaufe (5) für die Kontaktierung von übereinander gewundenen Schlaufenbereichen an einem Bandende von der einen Bandoberfläche auf die andere Bandoberfläche geführt ist.

6. System nach einem der Ansprüche 4 oder 5, wobei das Wickelband (3) an beiden Bandenden Antennenschlaufen (5) und damit verbundene integrierte Schaltungen (23) aufweist.

7. System nach Anspruch 1, wobei die Antennenschlaufe (5) am Wickelkern (2) angeordnet und im Kernmaterial integriert ist oder in einer entsprechenden Nut um den äusseren oder den inneren Kernumfang verläuft.

8. System nach einem der Ansprüche 1 bis 7, wobei die integrierte Schaltung (23) in der Lücke der Antennenschlaufe (5) angeordnet ist.

9. System nach Anspruch 8, wobei die integrierte Schaltung (23) auf einem Verbindungsstück (6) angeordnet ist, welches Verbindungsstück ferner zwei voneinander beabstandete Schlaufenanschlussbereiche (5.1 und 5.2) aufweist.

10. System nach Anspruch 9, wobei das Verbindungsstück (6) eine auf einem flexiblen oder starren Träger (20) angeordnete, gedruckte Schaltung ist, die mindestens mit der integrierten Schaltung (23) bestückt ist.

11. System nach einem der Ansprüche 9 oder 10, wobei die Schlaufenendbereiche (5.1 und 5.2) genügend lang ausgestaltet sind, um leitend miteinander verbunden die ganze Antennenschlaufe (5) zu bilden.

12. System nach einem der Ansprüche 1 bis 11, wobei die Antennenschlaufe (5) aus einem Metallband besteht, das im wesentlichen senkrecht zur Antennenfläche angeordnet ist.

## Claims

1. System with a plurality of substantially hollow cylindrical winding cores (2) with winding tapes (3) and a reading and/or writing device (10), wherein the winding cores (2) and winding tapes (3) are equipped for the forming of movable rolls (1) particularly of printed products, wherein the winding cores (2) or the rolls (1) comprise an antenna loop (5), which defines an antenna area and comprises a gap, wherein the ends of the antenna loop (5) adjacent to the gap are connected to an integrated circuit (23) comprising stored data, wherein the reading and/or writing device (10) comprises a main reading direction (L) and is equipped for contactless reading and/or overwriting of the data stored in the integrated circuit and is movable in relation to the winding cores (2) or rolls (1), wherein the antenna loop (5) runs around the winding cores (2) or the rolls (1), such that the antenna area defined by the antenna loop (5) is orientated substantially in perpendicular to the axis of the winding core (2), and wherein the system further comprises arrangements of substantially coaxially aligned winding cores (2) and/or rolls (1) and, for identification and localisation of rolls (1) or winding cores (2), the reading and/or writing device (10) is movable into the coaxially aligned winding cores (2) of such arrangements, such that its main reading direction (L) is orientated in perpendicular or obliquely to the antenna areas defined by the antenna loops (5).

2. System according to claim 1, wherein at least one part of the antenna loop (5) is arranged on the winding tape (3).

3. System according to claim 2, wherein two antenna loop contact areas (5.1 and 5.2) mutually distanced by a gap and connected to the integrated circuit are arranged on the winding core (2), which areas (5.1 and 5.2) are contacted by the antenna loop (5) on the winding core (3), when the winding tape (3) is wound on the winding core (2).

4. System according to claim 2, wherein the antenna loop (5) comprises a gap on the tape (3) and the loop ends are, on both sides of the gap, connected to the integrated circuit, which is also arranged on the tape, and wherein two loop areas wound one on top of the other are mutually contacted, when the tape (3) is wound around the winding core (2) or the roll (1).

5. System according to claim 4, wherein, for contacting of superposedly wound loop areas, the loop (5) is guided from one tape surface to the other tape surface in the area of a tape end.

6. System according to one of claims 4 or 5, wherein the winding tape (3) comprises antenna loops (5) and integrated circuits connected thereto on both tape ends.

7. System according to claim 1, wherein the antenna loop (5) is arranged on the winding core (2) by being integrated into the material of the core or by running around the outer or the inner perimeter of the core in a corresponding groove.

8. System according to one of claims 1 to 7, wherein the integrated circuit (23) is arranged in the gap of the antenna loop (5).

9. System according to claim 8, wherein the integrated circuit (23) is arranged on a connection element (6), which connection element further comprises two mutually distanced loop connecting regions (5.2 and 5.2).

10. System according to claim 9, wherein the connecting element (6) is a printed circuit arranged on a flexible or rigid carrier (20), which printed circuit is equipped with the integrated circuit (23).

11. System according to one of claims 9 or 10, wherein the loop end areas (5.1 and 5.2) are designed to be of a sufficient length to form, being conductively connected, the complete antenna loop (5).

12. System according to one of claims 1 to 11, wherein the antenna loop consists of a metal tape, which is substantially perpendicular to the loop area.

## Revendications

1. Système comprenant une pluralité de moyeux d'enroulement (2) sensiblement cylindriques et creux avec des bandes à enrouler (3) et un appareil de lecture et/ou d'écriture (10), dans lequel les moyeux d'enroulement (2) et les bandes à enrouler (3) sont conçus pour former des rouleaux (1) mobiles, en particulier faits de produits imprimés, les moyeux d'enroulement (2) ou les rouleaux (1) possédant une boucle d'antenne (5) qui couvre une surface d'antenne et comporte une lacune, les extrémités de la boucle d'antenne (5) contiguës à la lacune étant reliées à un circuit intégré (23) dans lequel des données sont mémorisées, l'appareil de lecture et/ou d'écriture (10) ayant un sens de lecture principal (L) et étant conçu pour une lecture et/ou une écriture sans contact des données enregistrées dans le circuit intégré et étant mobile par rapport à des moyeux d'enroulement (2) ou des rouleaux (1), la boucle d'antenne (5) étant passée autour des moyeux d'enroulement (2) ou des rouleaux (1) de telle manière que la surface d'antenne couverte par la boucle d'antenne (5) soit sensiblement perpendiculaire à l'axe du moyeu d'enroulement (2), le système comprenant en outre des dispositions de moyeux d'enroulement (2) et/ou de rouleaux (1) sensiblement coaxiaux les uns par rapport aux autres et l'appareil de lecture et/ou d'écriture (10) étant mobile, en vue de l'identification et de la localisation de rouleaux (1) ou de moyeux d'enroulement (2), dans les moyeux d'enroulement (2) coaxiaux les uns des autres de ces dispositions, de sorte que son sens de lecture principal (L) est perpendiculaire ou oblique par rapport aux surfaces d'antenne couvertes par les boucles d'antenne (5).

2. Système selon la revendication 1, **caractérisé en ce qu'**une partie au moins de la boucle d'antenne (5) est disposée sur la bande à enrouler (3).

3. Système selon la revendication 2, **caractérisé en ce qu'**il est prévu sur le moyeu d'enroulement (2) deux zones de raccordement d'antenne (5.1 et 5.2) séparées par une lacune et reliées au circuit intégré, qui sont mises en contact par la boucle d'antenne (5) sur la bande à enrouler (3) lorsque la bande à enrouler (3) est enroulée sur le moyeu d'enroulement (2).

4. Système selon la revendication 2, **caractérisé en ce que** la boucle d'antenne (5) sur la bande (3) présente une lacune et les extrémités de la boucle de part et d'autre de la lacune sont reliées au circuit intégré (23) également disposé sur la bande, et **en ce que** deux zones de boucle enroulées l'une par-dessus l'autre sont mises en contact l'une avec l'autre lorsque la bande à enrouler (3) est enroulée autour du moyeu d'enroulement (2) ou du rouleau (1).

5. Système selon la revendication 4, **caractérisé en ce que** la boucle (5) est guidée, pour la mise en contact de plusieurs zones de boucle enroulées les unes par-dessus les autres à une extrémité de la bande, d'une surface de bande à l'autre surface de bande

6. Système selon l'une ou l'ensemble des revendications 4 ou 5, **caractérisé en ce que** la bande à enrouler (3) présente aux deux extrémités de la bande des boucles d'antenne (5) et des circuits intégrés (23) reliés à celle-ci.

7. Système selon la revendication 1, **caractérisé en ce que** la boucle d'antenne (5) est disposée sur les moyeux d'enroulement (2) et intégrée dans le matériau du moyeu ou dans une gorge correspondante autour de la circonférence extérieure ou intérieure du moyeu.

8. Système selon l'une ou l'ensemble des revendications 1 à 7, **caractérisé en ce que** le circuit intégré (23) est disposé dans la lacune de la boucle d'antenne (5).

9. Système selon la revendication 8, **caractérisé en ce que** le circuit intégré (23) est disposée sur un élément de liaison (6), lequel élément de liaison présente en outre deux zones de raccordement de boucle (5.1 et 5.2) distantes l'une de l'autre.

10. Système selon la revendication 9, **caractérisé en ce que** l'élément de liaison (6) est un circuit imprimé disposé sur un support (20) flexible ou rigide, qui est au moins garni du circuit intégré (23).

11. Système selon l'une ou l'ensemble des revendications 9 ou 10, **caractérisé en ce que** les zones d'extrémité de boucle (5.1 et 5.2) sont suffisamment longues pour être reliées entre elles de manière conductrice et former l'ensemble de la boucle d'antenne (5).

12. Système selon l'une ou l'ensemble des revendications 1 à 11, **caractérisé en ce que** la boucle d'antenne (5) se compose d'un ruban métallique qui est disposé de manière sensiblement perpendiculaire à la surface d'antenne.
